# EUROPEAN PATENT SPECIFICATION

(11) **EP 0 893 859 B1**
(45) Date of publication and mention of the grant of the patent: **27.03.2002**
(21) Application number: 97203389.8
(22) Date of filing: 30.10.1997
(51) Int. Cl.: H01R 31/08, H01R 9/26, H01R 9/24

(54) **Modular comb connector for relay interfaces**
Modularer Kammverbinder für Schnittstellenrelais
Connecteur en peigne modulaire pour relais d'interface

(30) Priority: 23.07.1997 IT TO970154
(43) Date of publication of application: 27.01.1999
(73) Proprietor: FINDER S.p.A., 10042 Nichelino (Torino) (IT)
(72) Inventor: Giordanino, Piero, 10040 Almese (IT)
(74) Representative: Robba, Pierpaolo

(56) References cited:
- EP-A- 0 387 158
- EP-A- 0 678 934
- DE-C- 4 201 219
- DE-C- 19 542 628
- US-A- 4 582 377
- US-A- 5 372 521

## Description

The present invention refers to a modular comb connector for mutually connecting relay-supporting sockets for relay interfaces and a relay interface with such modular comb. connector.

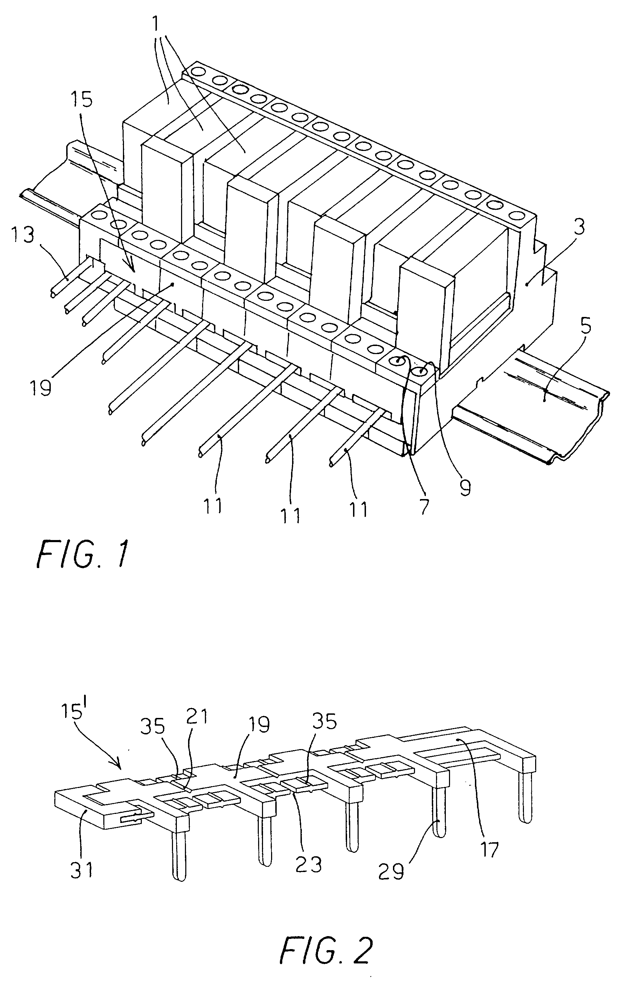

In modern industrial relay drives, when a plurality of relays 1 must be interfaced, for example with a Programmable Logic Controller (PLC), as best shown in Fig. 1, these relays 1 are mounted on suitable interface sockets 3 and these sockets 3 are secured, through common securing means (not shown), on support means 5 like the so-called "DIN bars" to be then placed on suitable industrial panels.

The plurality of sockets 3, in an amount commonly equal to eight or multiples of eight, must then be operatively connected through their respective pairs of coil-controlling terminals 7 and 9: for this purpose, the different terminals 7 are for example connected to PLC outputs through conductors 11, while the different terminals 9 must be connected in parallel one to the other and then to a common point, for example ground, through the connector 13.

In order to carry out this parallel connection to a common point, so far two procedures have been used in the art. The first one consists in manually bridging a terminal to the following ones by means of short connectors welded to the different terminals: as clearly appears, this procedure is very long and costly, in addition to being prone to mistakes, and it is absolutely inadequate for electric industrial panels, where this operation must be repeated for a very high number of times. The second prior art procedure consists in arranging a connection bar of the "comb" type equipped with a plurality of teeth made of conducting material, said teeth being mutually connected and projecting from the bar at right angles: the teeth of said bar are inserted one in each terminal and clamped therein through screws, thus immediately establishing the parallel connection between the different terminals.
These bars, however, are of a fixed length, or, as disclosed in document US 5,372,521, are made of metal segments that are joined, laterally, with lugs which constitute bridging between the segments. The segments can be separated but the length of each segment must be predetermined in the manufacturing phase.
A terminal bar of the modular type is disclosed in document US 4,582,377. A strip, having a plurality of push on blades, can be separated in smaller bars, the separation being facilitated by the presence of predetermined break lines, After separation each single bar must be covered by an insulating material, a plastic bar having a suitable length, for contact protection.

Object of the present invention is solving the above prior art problems, by providing a modular comb connector that allows an immediate parallel connection of terminals in any amount of sockets for relay interfaces, such connector being able to be adapted to various types of interfaces.

A further object of the present invention is providing a comb connector that, though being able to be modulated at will, guarantees a protection degree in compliance with the standards, not providing uncovered live parts that are therefore potentially dangerous for users.

The above and other objects and advantages of the invention, as will appear from the following description, are obtained with a modular comb connector for relay interfaces as described in Claim 1.

The present invention will be better described by some preferred embodiments thereof, given as a non-limiting example, with reference to the enclosed drawings, in which:
- Figure 1 is a perspective view of an embodiment of the present invention inserted into a relay interface of the type with eight sockets;
- Figure 2 is a perspective view of the modular connector of the present invention in the embodiment suitable to connect five sockets;
- Figure 3 is a top view of the modular connector of the present invention;
- Figure 4 is a sectional view performed along line IV-IV in Fig. 3;
- Figures 5 and 6 are side sectional views of the connector in Fig. 3 that show its arrangement for connection teeth;
- Figure 7 is a side view of the protection plug for the modular connector of the present invention; and
- Figure 8 is a top view of the protection plug in Fig. 7.

As already mentioned, Fig. 1 shows a relay interface equipped with eight relays mounted on different types of sockets 3 and connected for example to a PLC. As clearly appears from Fig. 1, the connection of the respective terminals 9 of the different sockets 3 is performed by a connector, that in the example is a modular comb connector 15 of the present invention.

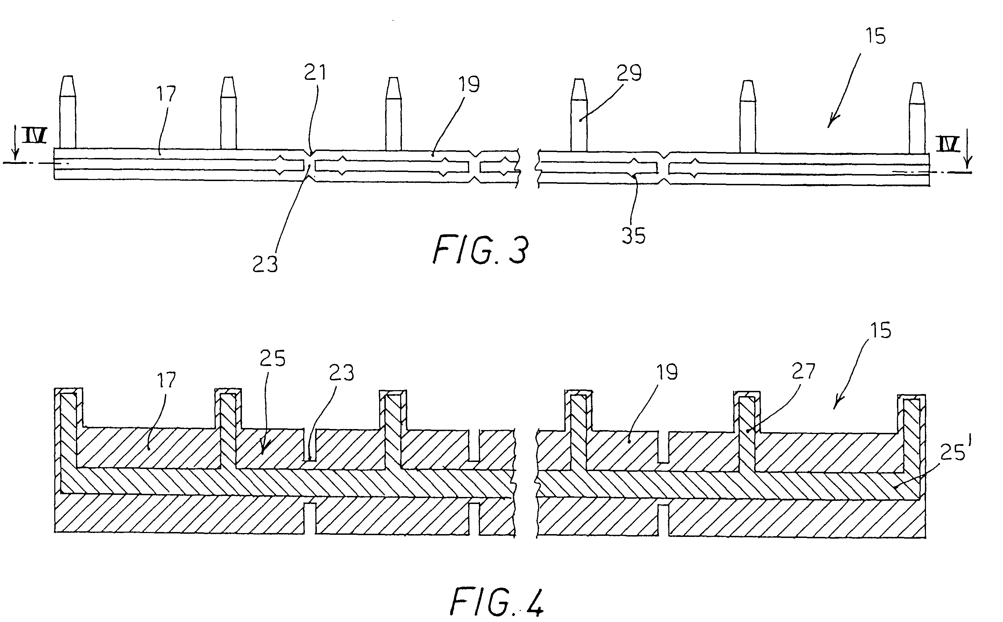

The modular connector 15 is composed of an elogated body 17 of insulating material that, different from the common prior art embodiment, is not a single unique bar, substantially shaped as a triangle, but is composed of a plurality of sections 19 (for example, for the connection of an eight-socket interface, the provided sections 19 are six) mutually separated by respective notches 21 and recesses 23 obtained into the body 17 itself. As clearly appears from Figures 3 and 4, purpose of these notches 21 and these recesses 23 is reducing the height of the body 17 of the connector 15, thus facilitating the operation of breaking the modular connector 15 in order to obtain a reduced modular connector 15' (as shown in Fig. 2) suitable to connect interfaces with a lower number of sockets (for example five for connector 15' in Fig. 2).

The real connection member 25 is inserted inside the body 17, that, as well known in the art and best shown in Fig. 4, 5 and 6, is composed of an elongated bar 25' made of conducting material (for example brass) that extends for the whole length of the body 17. From this bar 25' a plurality of arms 27 project, one for each of the sockets 3 to be connected. In turn, from each one of the arms 27, respective connection teeth 29 project at right angles, said teeth being those that are inserted into the different terminals 9 to be connected in parallel.

Due to the particular shape of the modular connector 15, it can therefore be broken down, both by means of common cutting tools, and also by means of a manual operation, in such a way as to be finally composed of as many elementary sections as are necessary for the different types of modular systems for relay sockets to be installed in industrial drives.

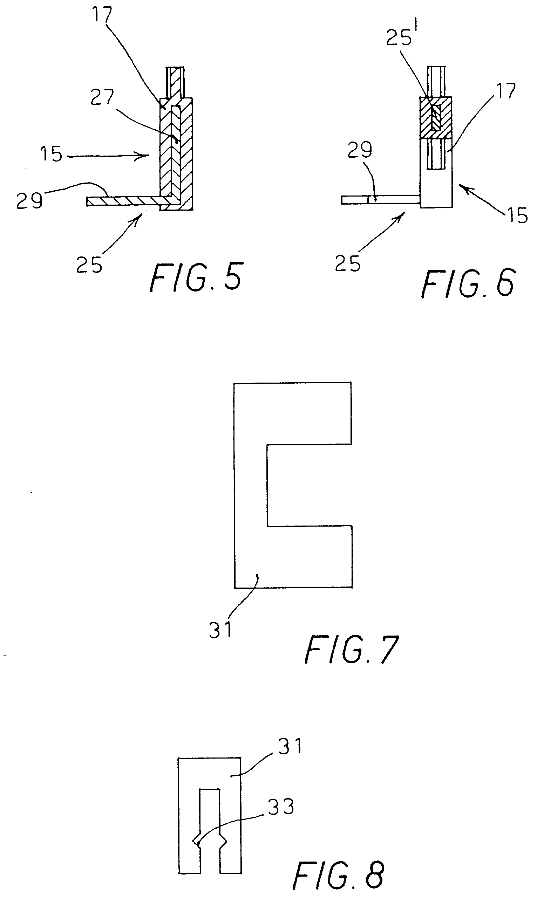

The modular connector 15 of the present invention is further equipped with a protection plug 31, that is shown as assembled in Fig. 2 and in detail in Fig. 7 and 8. Purpose of this protection plug 31 is preventing that, once having broken the body 17 of the modular connector 15, the part of the bar 25' of the connection member 25, as clearly appears from Fig. 6, that is a live part of the plant, remains visible and uncovered. The protection plug 31, in a preferred embodiment thereof, is substantially shaped as a C and is equipped with a pair of recesses 33 adapted to engage respective projections 35 provided on each one of the ends of the different sections 19 of the body 17.

After having broken the modular connector 15 down to obtain its desired length, therefore, the protection plug 31 is fixed to its end that has remained uncovered (obviously, if the connector 15 is broked down at both its ends, a pair of protection plugs 31 will be used), recovering the protection against accidental contacts with live parts, as required by the standards in force, and finally a modular connector 15 as shown in Fig. 2 is realized, suitable for any composition and configuration of relay interfaces for different types of drives, in particular for industrial drives.

## Claims

1. Modular comb connector (15) for relay interfaces comprising:
- an elongated body (17) of insulating material; and
- a connection member (25), said connection member (25) being embedded into said body (17) and being made shaped as a comb made of conducting material, said connection member (25) being composed of an elongated bar (25') equipped with a plurality of arms (27) from each one of which a plurality of connection teeth (29) project at right angles;
said modular comb. connector being **characterized in that**:
said elongated body (17) is composed of a plurality of sections (19) mutually separated by notches (21) and recesses (23), said sections being adapted to be detached from said body (17) in order to provide a connector (15) with a number of connection teeth (29) that is less than before said detachment, and **in that**
it is equipped with at least one protection plug (31) adapted to be inserted on one of the ends of said connector (15) to cover the conducting material parts of said connector (15) remained uncoveved after said detachment.

2. Modular comb connector (15) according to Claim 1, **characterized in that** each one of said sections (19) is equipped at both its ends with a pair of projections (35) adapted to engage adequate recesses (33) obtained in said protection plug (31).

3. Relay interfaces equipped with a plurality of sockets (3) on which respective relays (1) are mounted, said sockets (3) being mutually connected in a respective terminal (9) of their pairs of terminals (7, 9) by means of a modular comb connector (15) according to any one of Claims 1 to 2.

## Patentansprüche

1. Modularer Kammverbinder (15) für Relaisschnittstellen, umfassend:
- einen länglichen Hauptteil (17) aus isolierendem Material und
- ein Verbindungsglied (25), wobei das Verbindungsglied (25) im Hauptteil (17) eingebettet ist und in der Form eines aus leitendem Material hergestellten Kamms ausgeführt ist, wobei das Verbindungsglied (25) aus einer länglichen Leiste (25') zusammengesetzt ist, die mit einer Mehrzahl an Armen (27) ausgestattet ist, wobei von jedem der Arme eine Mehrzahl an Verbindungszähnen (29) im rechten Winkel heraussteht, wobei der modulare Kammverbinder **dadurch gekennzeichnet ist, dass** der längliche Hauptteil (17) aus einer Mehrzahl an Abschnitten (19) zusammengesetzt ist, die durch Kerben (21) und Ausnehmungen (23) voneinander getrennt sind, wobei die Abschnitte darauf ausgerichtet sind, vom Hauptteil (17) abgenommen zu werden, um einen Verbinder (15) mit einer Anzahl an Verbindungszähnen (29), die geringer als vor der Abnahme ist, zur Verfügung zu stellen, und dadurch, dass er mit mindestens einem Schutzstecker (31) ausgestattet ist, der darauf ausgerichtet ist, an einem der Enden des Verbinders (15) eingesetzt zu werden, um die Teile aus leitendem Material des Verbinders (15), die nach der Abnahme unbedeckt geblieben sind, zu bedecken.

2. Modularer Kammverbinder (15) nach Anspruch 1, **dadurch gekennzeichnet, dass** jeder der Abschnitte (19) an beiden Enden mit einem Paar Vorsprünge (35) ausgestattet ist, die dafür ausgelegt sind, in beim Schutzstecker (31) vorhandene passende Ausnehmungen (33) einzugreifen.

3. Relaisschnittstellen, die mit einer Mehrzahl an Buchsen (3) ausgestattet sind, an denen jeweilige Relais (1) angebracht sind, wobei die Buchsen (3) in einer jeweiligen Endstelle (9) ihrer Endstellen-Paare (7, 9) mittels eines modularen Kammverbinders (15) gemäß einem der Ansprüche 1 bis 2 miteinander verbunden sind.

## Revendications

1. Connecteur modulaire en peigne (15) pour des interfaces de relais comprenant :
- un corps allongé (17) en matériau isolant ; et
- une pièce de connexion (25), ladite pièce de connexion (25) étant encastrée dans ledit corps (17) et étant réalisée en forme de peigne réalisé en matériau conducteur, ladite pièce de connexion (25) étant composée d'une barre allongée (25') équipée d'une pluralité de bras (27) à partir de chacun desquels une pluralité de dents de connexion (29) font saillie à angles droits ;
ledit connecteur en peigne modulaire étant **caractérisé en ce que** :
- ledit corps allongé (17) est composé d'une pluralité de sections (19) séparées mutuellement par des encoches (21) et des retraits (23), lesdites sections étant adaptées pour être détachées dudit corps (17) de façon à fournir un connecteur (15) avec un nombre de dents de connexion (29) qui est inférieur au nombre avant ledit détachement,
et **en ce que**:
- il est équipé d'au moins une fiche de protection (31) adaptée pour être insérée sur une extrémité dudit connecteur (15) pour couvrir les parties en matériau conducteur dudit connecteur (15) restées découvertes après ledit détachement.

2. Connecteur modulaire en peigne (15) selon la revendication 1, **caractérisé en ce que** chacune desdites sections (19) est munie à ses deux extrémités d'une paire de saillies (35) adaptées pour venir en prise dans des retraits adéquats (33) obtenus dans ladite fiche de protection (31).

3. Interfaces de relais équipées d'une pluralité d'embases (3) sur lesquelles les relais respectifs (1) sont montés, lesdites embases (3) étant connectées mutuellement dans un terminal respectif (9) de leur paire de terminaux (7, 9) au moyen d'un connecteur modulaire en peigne (15) selon l'une quelconque des revendications 1 ou 2.
